# EUROPEAN PATENT APPLICATION

(11) **EP 3 012 680 A1**
(43) Date of publication of application: **27.04.2016**
(21) Application number: 14190380.7
(22) Date of filing: 24.10.2014
(51) Int. Cl.: G02B 27/01

(54) **A vehicular display module**

(71) Applicant: Continental Automotive GmbH, 30165 Hannover (DE)
(72) Inventor: Doi, Shinobu, Kanagawaku, 221-0062 Yokohama (JP)

(57) **Abstract**

Vehicular display systems often comprise a heads-up display (HUD) and a heads-down display (HDD) for providing more complex information to the driver than could be achieved with a conventional gauge. HDD projection apparatus can take up valuable space behind the dashboard, though. This application discusses a technique to save space behind the dashboard by reorienting the optical path of the HDD. At the same time, the realignment of the optical path allows the display means applied to the HDD also to be used for the HUD, thus reducing the number of parts needed.

## Description

### Field of the invention

This invention relates to the field of automotive applications. In particular, the invention relates to a vehicular display module.

### Background

In-car electronic display systems are continually being supplemented, to allow the provision of additional information to a driver. Often, it is useful to provide some information (such as fuel-consumption information) in the conventional position, in the space behind the steering wheel. To check this display, the driver must move his field of view downwards whilst driving. Other information (such as the current speed of the vehicle) can be projected onto a viewing means positioned in the driver's forward field of view, allowing the driver to monitor this information without moving his eyes far from the road. An example of such a system is presented in US patent no. 6,639,569.

Such systems can, though, be further improved.

### Summary of the invention

It is an object of the invention to provide for an improved vehicular display module.

This object is solved by the features of the independent claims. Developments of the invention are stated in the dependent claims, and the following description.

According to a first aspect of the invention, there is provided a vehicular display module. The module comprises an image projector for a heads-up display, a reflector, and a heads-down display defining a heads-down display plane. The image projector is configured to emit a light path to the reflector, and the light path passes through the heads-down display plane.

Advantageously, according to the first aspect, space in the dashboard is saved, because the heads-up display optics can be positioned horizontally. Additionally, heat from the heads-up display backlight does not convect upwards through any display means used in the display module. Such convection could otherwise cause damage to the display means.

According to an embodiment of the invention, the image projector and the reflector of the vehicular display module are disposed on opposite sides of the heads-down display plane.

Advantageously, according to this embodiment, a single display means may be used to provide the image displayed in the heads-up display and a heads-down display, thus providing a technical simplification.

According to an embodiment of the invention, the image projector comprises a display module associated with the heads-down display, and the display module is in parallel with the heads-down display plane.

Advantageously, according to this embodiment, the display module may extend along the heads-down display plane, allowing it to intercept the optical path, to produce a projected image in the heads-up display using the same display as the heads-up display.

According to an embodiment of the invention, the image projector comprises a display module disposed exclusively in the optical path.

Advantageously, according to this embodiment, a smaller and/or cheaper display means may be used only for the HUD display.

According to an embodiment of the invention, a first portion of the display module is disposed in the optical path, and a second portion of the display module is disposed behind the heads-down display.

Advantageously, according to this embodiment, the same display means may be used for the heads-down display, and the heads-up display.

According to an embodiment of the invention, the display module is a TFT LCD panel.

Advantageously, according to this embodiment, a high-quality heads-up or heads-down display image may be provided.

According to an embodiment of the invention, the display module is a segmented LCD.

Advantageously, according to this embodiment, a cheaper heads-up or heads-down display image may be provided.

According to an embodiment of the invention, the vehicular display further comprises a back-light arranged behind the second portion of the display module.

Advantageously, according to this embodiment, the heads-down display may be viewed more easily.

According to an embodiment of the invention, the display signals for the first and second portions of the display module are generated using the same microcontroller.

Advantageously, according to this embodiment, only one microprocessor is needed, lowering the circuit design complexity and the bill-of-materials cost.

According to an embodiment of the invention, the image projector comprises a light and a lightguide arranged to emit light along the optical path.

Advantageously, according to this embodiment, a higher-quality heads-up display image is provided.

According to a second aspect of the invention, a vehicle dashboard assembly is provided, comprising the vehicular display module according to the previously described first aspect or any of its embodiments.

Advantageously, according to this aspect, space may be saved in the vehicle dashboard, because the heads-up display's optical arrangements are oriented more favourably.

According to an embodiment of the second aspect, the vehicle dashboard assembly further comprises a HUD display, wherein a further optical path is present between the reflector and the combiner, and the HUD display is configured to display a heads-up image projected by the image projector.

According to a third aspect of the invention, a vehicle comprising the vehicular display module according to the first aspect, or its embodiments, is provided.

Advantageously, according to this aspect, space may be saved in the dashboard area of the vehicle.

According to a fourth aspect of the invention, a vehicle comprising the dashboard assembly according to the second aspect, or its embodiment, is provided.

Advantageously, according to this aspect, space may be saved in the dashboard area of the vehicle.

According to a fifth aspect of the invention, a cockpit display for an aeroplane comprising the vehicular display module according to the first aspect, or its embodiments, is provided.

Advantageously, according to this aspect, space may be saved in the cockpit area of the aeroplane.

In the following application, the term "heads-up display", also referred to as a "HUD", concerns a means for providing information to a vehicle driver optically, without the driver having to move his field of view from the road significantly. The HUD may be projected directly onto the car windscreen, or alternatively it may be projected onto a HUD display resting on top of the car dashboard.

In the following application, the term "heads-down display", also referred to as a "HDD", concerns a means for providing information to a vehicle driver optically, which is located in the space behind the steering wheel of a car dashboard. This HDD typically shares space with commonly-known items of a car dashboard viewing area containing items such as speed gauges (combimeters).

In the following application, the term "heads-down display plane" is the geometric plane aligned with a display means, where the display means is aligned with a combimeter's rear surface. A combimeter is aligned with the car dashboard. As such, the heads-down display plane is not a physical item.

Therefore, it can be seen as a gist of the invention that, in a HUD display system, the optical path between an image projector and reflector crosses over the plane of the combimeter face, which allows the tight "real-estate" in the rear of the dashboard to be increased (through repositioning of the image projector), whilst preserving the optical path length necessary required to create a virtual image at a distance far enough away from the driver's eye-point.

These and other aspects of the present invention will become apparent from and elucidated with reference to the embodiments described hereinafter.

Exemplary embodiments of the present invention will now be described in the following, with reference to the following drawings.

### Brief description of the drawings

- Fig. 1: shows a side-view of a prior art vehicular display module.
- Fig. 2: shows a side-view of a vehicular display module according to a first aspect of the invention.
- Fig. 3: shows a side-view of the vehicular display module in use.
- Fig. 4: is a schematic side-view of the first aspect of the invention.
- Fig. 5: shows a display means according to an embodiment of the invention.
- Fig. 6: shows an alternative vehicular display module according to a first aspect of the invention.
- Fig. 7: shows a vehicle dashboard according to a second aspect of the invention.
- Fig. 8: shows a vehicle according to a third aspect of the invention.

### Detailed description of the embodiments

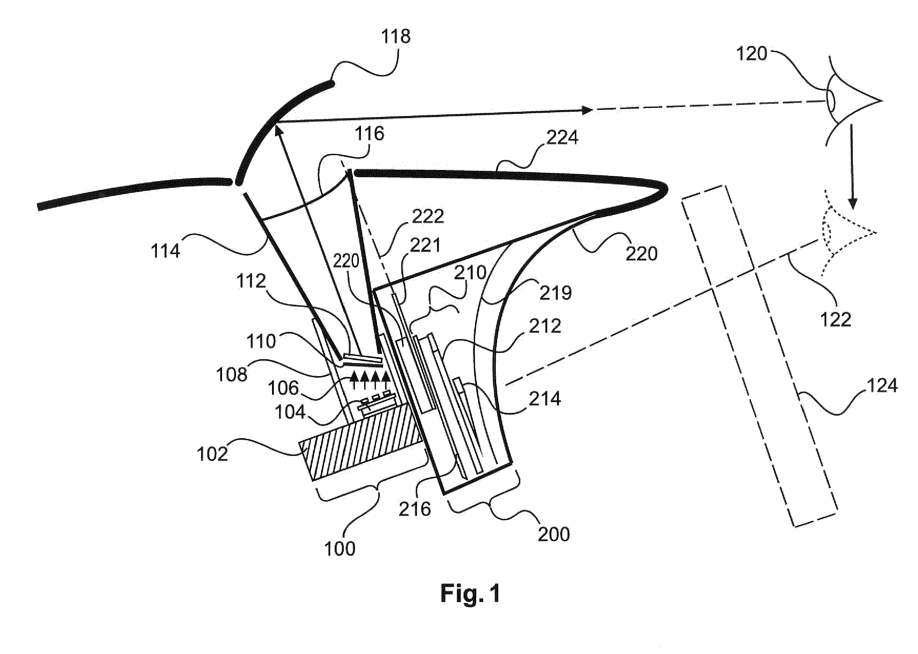

Fig. 1 shows a side-view of a conventional HUD projection arrangement. It is broadly grouped into a HUD projector 100 and a dashboard combimeter display 200. The whole is contained within a dashboard 224, which accommodates HUD display 118. The HUD may be viewed by a user 120 along a horizontal display path, and the HDD may be viewed by the user along the alternative path 122, which is typically through a steering wheel 124 towards the dashboard 224.

HUD projector 100 comprises a control unit 102 containing display and interface electronics. This is connected electrically to a light emitting and light-guide arrangement 104. Funnel means 108 and cone means 114 are arranged to provide an optical path to the HUD display 118, preferably via a window 116, which prevents dust ingress into the cone means 114. The HUD image is generated by first display means 112. Typically, this is a TFT or LCD display. Optionally, diffuser means 110 may be placed in front of the display means 112.

Seperately, it will be noted that the driver-side of the dashboard contains the combimeter display 200, with a side edge 220. Optionally, a window 219 is present in front of the combimeter. The combimeter comprises at least one traditional "moving-needle" display 210, comprising a moving needle 214, a gauge surface 216 behind the moving needle, and a side wall 212. A HDD is provided either in combination with, or by the side of, the combimeter display. The HDD comprises a backlight 220, arranged behind a display means 221 (typically a TFT or LCD display). The backlight 220 and display means 221 together form an HDD to display additional information (such as alarm status, or fuel level) to the driver. The HDD may be positioned directly behind the combimeter, with a gap in the combimeter gauge surface 216 allowing perception of the HDD behind. Alternatively, or in combination, the HDD may be aligned centrally in-between two combimeters, or to the left or right hand side.

Line 222 illustrates a heads-down display plane resulting from the placement of the display means 221. It will be noted that at no point does the heads-down display plane 222 cross the optical path of the HUD inside the dashboard.

A system as illustrated in Fig. 1 can provide simultaneous HUD and HDD functionality, but at the high cost of having two display means 112 and 221. Much of the space occupied by the HUD projector 100 in the rear of the dashboard is wasted. Heat from the HUD projector 100 convects upwards through the diffuser 110 and the HUD display 112. The application of heat to display modules (for example, TFT or LCD modules) has adverse, consequences and can even damage them.

Therefore, there is a need for an improved vehicular display system.

According to a first aspect of the invention, there is provided a vehicular display module. The module comprises an image projector for a heads-up display, a reflector, and a heads-down display defining a heads-down display plane. The image projector is configured to emit a light path to the reflector, and the light path passes through the heads-down display plane.

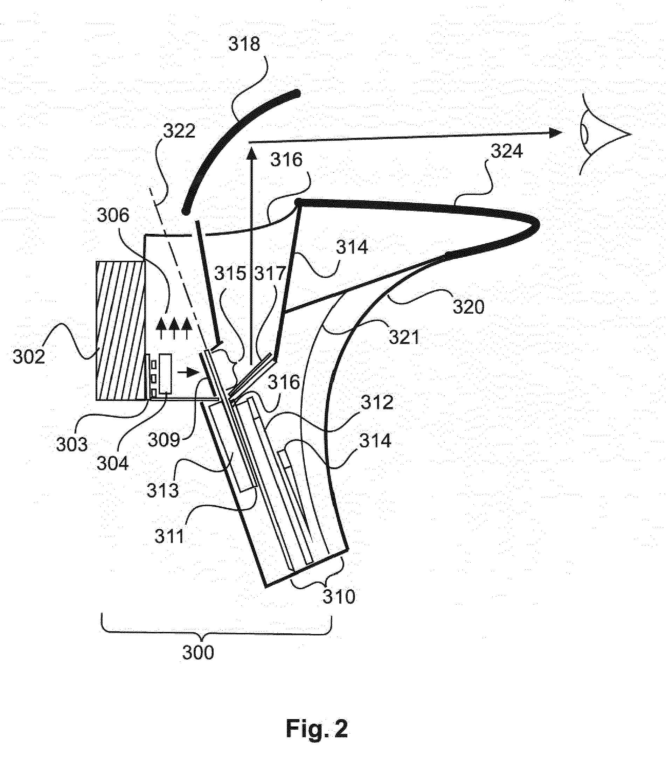

Fig. 2 shows a side-view of a vehicular display module 300 according to a first aspect of the invention. The frontof-dashboard arrangement 320 with window 321 and combimeter 310 as previously described is also common to this aspect.

The combimeter 310 has a HDD formed from display means 311, which is typically a TFT or an LCD flat-panel display. The display means lies in, and defines, a "heads-down display plane" 322. As noted in connection with Fig. 1, the HDD may be presented to the driver in a gap in the gap inbetween two combimeter gauges, or at the left and right extremes of the dashboard viewing area. As will be explained subsequently, the display means 311 is larger than is necessary for its HDD function, and it has a first portion 315 which extends along the heads-down display plane 322 towards the windscreen. This first portion 315 is obscured from the view of the driver.

In essence, the display means 311 is masked so as to provide a first portion 315 which is not directly visible to the driver, and a second portion which is directly visible to the driver. The masked portion is used to provide the HUD display.

The HUD control unit 302, and the accompanying light 303 and light-guide 304, have been re-arranged (when compared with Fig. 1) so that they project in a substantially horizontal direction (with respect to the vehicle's orientation). A cone means 314 for containing the optical path is provided (with an optional upper window 316 to prevent dust ingress). The body of the cone means 314 has an angled portion at the point where it meets the top of the combimeter. In the chamfered area is provided a reflector 317. The reflector is aligned to reflect the optical path originating from the light 303 and light-guide 304 towards the HUD display 318 (HUD mirror).

Thus, in Fig. 2, the light 303 and light-guide 304 are arranged to transmit light along a horizontal path, towards a reflector inclined substantially at 45 degrees to the horizontal path.

It will be appreciated that the light 303 and light-guide 304 may be arranged to generate an optical path which is above or below the horizontal path. The angled portion of the cone means, and the alignment angle of the reflector 317, may be realigned to account for such a variation in orientation of the optical path, provided that an optical path exists between the light 303 and light-guide 304 and the HUD display 318, and provided that the optical path so provided passes through the heads-down display plane 322.

Hitherto, the discussion of Fig. 2 has been confined to the production of an optical path between the light 303 and the HUD display 318. Of course, to display useful information, a first portion 311 of the display means 311 is arranged to interrupt the optical path between the light 303 and the reflector 317.

The display means 311 (for example, a TFT or an LCD) is capable of allowing the transmission of light through certain regions, and of blocking transmission of light through other regions, according to electronic control, as is known in the art. Thus, when driven appropriately by electronic signals, a first portion 315 of the display means 311 lying in the optical path between the light 303 and the reflector 317 can produce an image which is transmitted for display on the HUD display 318.

Therefore, the light 303 and the first portion 315 of the display means 311 are to be considered the image projector of the HUD. Conveniently, additional components such as a diffuser or a lens 309 may be provided to improve the quality of the projected image.

An implication of the above-described arrangement is that the optical path between the image projector (formed from light 303 and the first portion of the display means 315) and the reflector passes through the heads-down display plane 322.

Advantageously, such an arrangement allows space to be saved in the rear of the dashboard. Comparing Fig. 1 and Fig. 2, a substantial amount of space is saved in the area behind the combimeter, whilst retaining the optical path length necessary to display the HUD image.

In addition, only one display means 311 is needed to provide the optics for the HDD and the HUD. This reduces the bill-of-materials cost, and means that the HUD and the HDD may be controlled from shared electronic circuitry.

In addition, thermal convection 306 from the light 303 can be vented from the dashboard interior directly, without risking damage to the display means 311.

In other words, at least a part of the optical path between the backlight for the imaging plane incident on the display means and the lens and mirror is in front of the display surface of the combimeter, and another part of the optical path is behind the display surface of the combimeter.

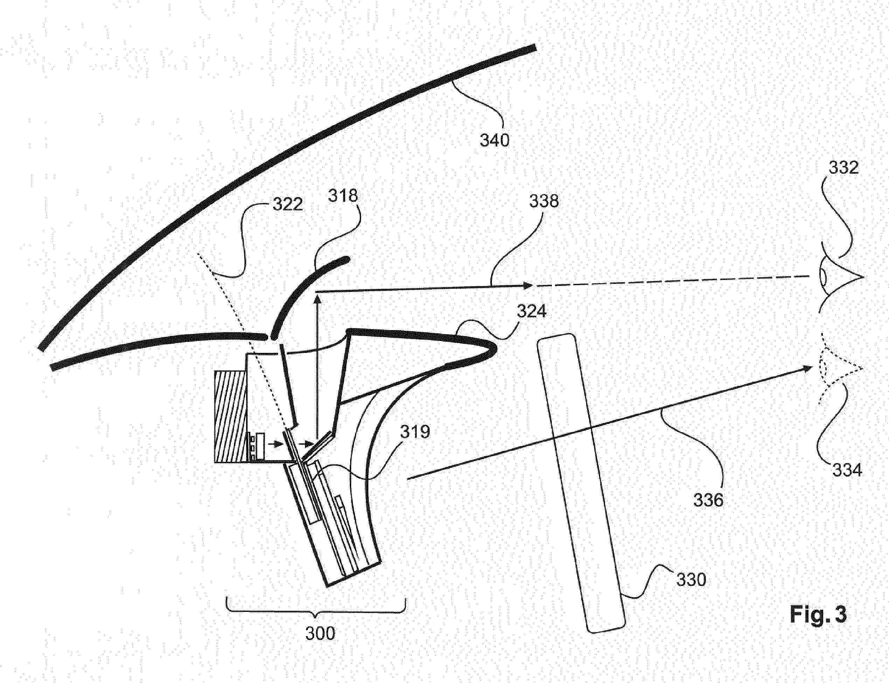

Fig. 3 shows a side-view of the combined vehicular display module 300 in use. In a first viewing position 332, the driver reads from the HUD 318, mounted on the dashboard 324. The driver views the HUD 318 along optical path 338, which is comfortable when looking out of the windscreen 340. In an alternative embodiment, the HUD may be projected directly onto the windscreen.

In a second viewing position 334, the driver views the HDD 319 along optical path 336, which will often pass through the steering wheel 330 onto the combimeter's surface.

The heads-down display plane 322 is illustrated for reference.

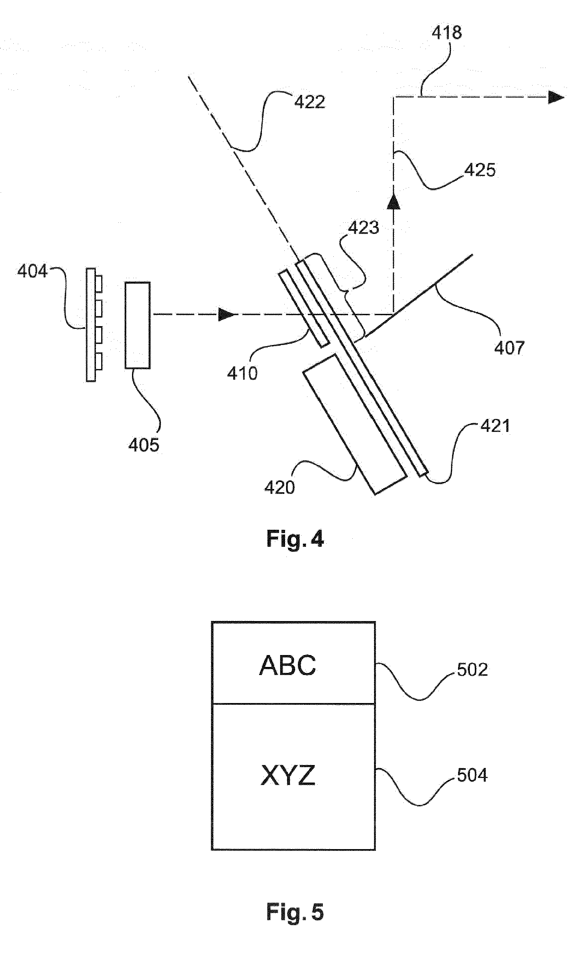

Fig. 4 is a schematic side-view of the first aspect of the invention.

In Fig. 4, the light 404 (corresponding to light 303 of Fig. 2) transmits along an optical path towards the HUD display 418 formed by angled reflector 407 (corresponding to reflector 317 in Fig 2). The optical path passes through the heads-down display plane defined by the display means 421 (corresponding to display means 311 in Fig. 2). The first portion 423 of the display means 421 (corresponding to first portion 315 in Fig. 2), in-between the light 404 and the reflector 407, forms the HUD image. The remaining portion of the display means 421 is used to form the HDD image. This remaining portion is illuminated by backlight 420 (corresponding to backlight 313 in Fig. 2).

Fig. 5 shows a representation of a TFT or LCD screen used as the display means 311. Other types of screen may also be used, provided they give the possibility of an optical transmission path through them. Portion 502 forms the first portion of the display means for forming the HUD image. Portion 504 forms the remaining portion of the display means for forming the HDD image. Thus, a single display means may be used to provide an image for an HUD display and an HDD display.

According to an embodiment of the invention, the image projector and the reflector of the vehicular display module are disposed on opposite sides of the heads-down display plane.

According to an embodiment of the invention, the reflector 317 is a plane mirror. According to an alternative embodiment, the reflector 317 is a curved mirror.

According to an embodiment of the invention, the reflector is angled at angle of 45 degrees to the horizontal path of emitted light.

According to an embodiment of the invention, the reflector is angled at in a range between 40 degrees and 50 degrees to the horizontal path of emitted light.

According to an embodiment of the invention, the reflector is angled at in a range between 30 degrees and 60 degrees to the horizontal path of emitted light.

According to an embodiment of the invention, the image projector comprises a display module associated with the heads-down display, and the display module is in parallel with the heads-down display plane.

According to an embodiment of the invention, a first portion of the display module is disposed in the optical path, and a second portion of the display module is disposed behind the heads-down display.

According to an embodiment of the invention, the image projector comprises a display module disposed exclusively in the optical path.

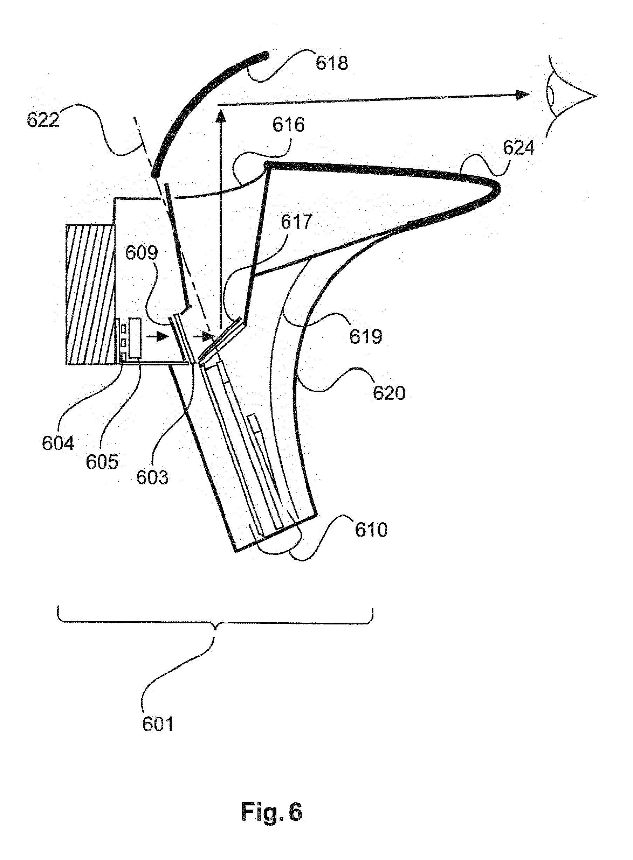

Fig. 6 shows a side-view of an embodiment of the invention. The dashboard 624 comprises side 620, and optionally the forward window 619, behind which the combimeter gauges 610 are displayed. The image projector described previously is employed, including light 604, display means 603. The reflector 617 completes the optical path from the image projector (604, 603) to the HUD display 618. Optionally, a light guide 605, a lens arrangement 609, and/or a diffuser may be provided. In this embodiment, display means 623 is only disposed in the optical path of the HUD display. In other words, the display means 603 is used only to display the HUD image.

Advantageously, a less complex, or smaller display means can be provided exclusively for the optical path to the HUD. Information displayed in the HUD display 618 sometimes needs to be less complex (for example, only a numerical speed readout), so that the driver is not unduly distracted, when driving.

According to an alternative embodiment, a second display means may be provided behind the combimeter display of a higher quality.

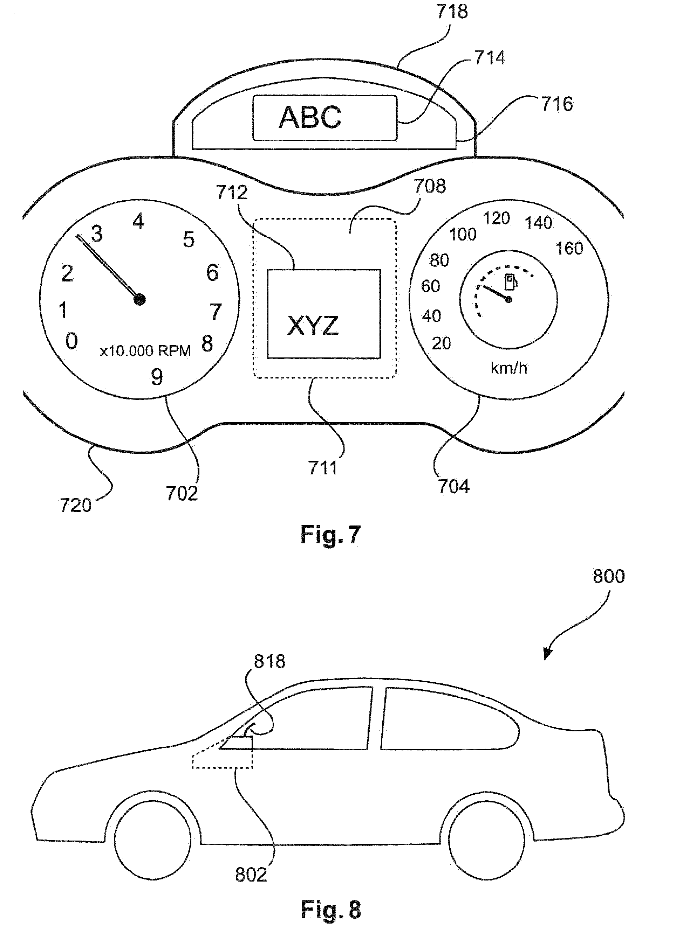

Fig. 7 shows the front view of a dashboard 720 of a system according to the first aspect, in use. Combimeters 702 and 704 are displaying the RPM and speed data, as is known. A central TFT display 711 in a portion 712 which is masked by the rear of the combimeter display. In fact, the TFT display behind the combimeter is much larger, as denoted by the dotted line. In front of, and behind the area corresponding to the portion 708 lies the angled portion of the cone means 314 containing the reflector of the HUD's optical arrangement, although this is not shown in the drawing because it would conventionally be fabricated from a dark material which is not visible to the driver. The portion of the TFT 708 provides the HUD image 714, which is projected onto the HUD mirror 716 (contained inside the HUD mirror enclosure 718).

According to an embodiment of the invention, the display module is a TFT, or a LCD panel. TFT displays can provide a high quality image.

According to an embodiment of the invention, the display module is a segmented LCD. Such displays are inexpensive, but alpha-numeric versions are capable of displaying a wide variety of simple information.

According to an embodiment of the invention, the vehicular display further comprises a backlight 313 arranged behind the second portion of the display module. Such a backlight 313 is necessary for allowing the HDD's display means 311 to be viewed.

According to an embodiment of the invention, the display signals for the first and second portions of the display module are generated using the same microcontroller.

According to an embodiment of the invention, the image projector comprises a light 303 and a light guide 304 arranged to emit light along the optical path.

According to a second aspect of the invention, a vehicle dashboard assembly is provided, comprising the vehicular display according to the previously described first aspect or any of its embodiments.

It will be appreciated that the combimeter 310 forming the HDD, as discussed in any of the embodiments presented herein need not be a mechanical gauge combimeter, as illustrated.

A current trend is for the entire HDD to comprise a large TFT, which replaces the mechanical gauges. In this case, the TFT screen of the HDD is configured to display an impression of a traditional meter cluster when the car is driving. Additional information can also be presented to the driver on the same screen. A square TFT used as the combimeter area may be masked to provide a curved shape, for aesthetic reasons. Thus, there will be areas of such a TFT HDD which are behind a mask, and wasted.

Such areas may be at the top centre, or the bottom centre of the TFT HDD screen. It will be understood that any area of the TFT screen can be masked, though.

A similar principle to the one described above may be applied, in that the masked areas of the HDD TFT may be used as a display element in an image projector of a HUD.

According to an embodiment of the invention, an electronic combimeter display 310 is provided. The electronic combimeter display 310 may be a TFT screen.

According to an embodiment of the invention, the heads-up display is projected using a masked portion of the heads-down display screen, preferably located at the top-centre or the bottom-centre of the heads-down display screen.

According to an embodiment of the invention, the electronic combimeter display 310 may be a TFT screen.

According to an embodiment of the second aspect, the vehicle dashboard assembly according further comprises:
A HUD display 118, wherein a further optical path is present between the reflector and the combiner, and the HUD display is configured to display a heads-up image projected by the image projector.

According to a third aspect of the invention, a vehicle comprising the vehicular display module according to the first aspect, or its embodiments, is provided.

Fig. 8 shows a vehicle 800 comprising the vehicular display system 802. An image is displayed to a driver using a HUD 818, as previously described.

According to a fourth aspect of the invention, a vehicle comprising the dashboard assembly according to the second aspect, or its embodiment, is provided.

According to a fifth aspect of the invention, a cockpit display for an aeroplane comprising the vehicular display module according to the first aspect, or its embodiments, is provided.

The preceding detailed description is merely exemplary in nature, and is not intended to limit the application and uses.

Furthermore, there is no intention to be bound by any theory presented in the preceding background or summary or the preceding detailed description.

It should be noted that the term "comprising" does not rule out a plurality of elements. It is further noted that features described with reference to one of the above exemplary embodiments can also be used in combination with other features of other exemplary embodiments described above.

Moreover, while at least one exemplary embodiment has been presented in the foregoing summary and detailed description, it should be appreciated that a vast number of variations exist.

The exemplary embodiments outlined are examples, and are not intended to limit the scope, applicability or configuration in any way.

Rather, the foregoing summary and detailed description will provide those skilled in the art with a convenient teaching for implementing an exemplary embodiment, it being understood that various changes may be made in the function and arrangement of the elements described in the exemplary embodiment without departing from the scope as set forth in the appended claims and their legal equivalents.

## Claims

1. A vehicular display module (300), comprising:
an image projector (303, 315) for a heads-up display (318);
a reflector (317); and
a heads-down display (311) defining a heads-down display plane (322);
wherein the image projector (303, 304) is configured to emit a light path to the reflector;
wherein the light path passes through the heads-down display plane.

2. The vehicular display module (300) of claim 1,
wherein the image projector (303, 315) and the reflector (317) are disposed on opposite sides of the heads-down display plane (322).

3. The vehicular display module (300) of claims 1 or 2,
wherein the image projector (303, 304) comprises a display module (311) associated with the heads-down display, and the display module is in parallel with the heads-down display plane.

4. The vehicular display module (300) of claims 1 to 3,
wherein the image projector (604, 605) comprises a display module (623) disposed exclusively in the optical path.

5. The vehicular display module (300) of claims 1 to 3,
wherein a first portion (315) of the display module (311) is disposed in the optical path, and a second portion of the display module is disposed behind the heads-down display.

6. The vehicular display module (300) of claims 3 to 5,
wherein the display module (311) is a TFT LCD panel.

7. The vehicular display module (300) of claims 3 to 5,
wherein the display module (311) is a segmented LCD.

8. The vehicular display module (300) according to claims 4 to 7, further comprising:
a back-light (313) arranged behind a second portion of the display module (311).

9. The vehicular display module (300) according to claims 4 to 8,
wherein display signals for the first (315) and second portions of the display module (311) are generated using the same microcontroller.

10. The vehicular display module (300) of any preceding claim,
wherein the image projector (303, 315) further comprises a light (303) and a lightguide (304) arranged to emit light along the optical path.

11. A vehicle dashboard assembly comprising the vehicular display module according to any preceding claim.

12. The vehicle dashboard assembly according to claim 11, further comprising:
a heads-up display (318), wherein a further optical path is present between the reflector (317) and the heads-up display, and the heads-up display is configured to display a heads-up image projected by the image projector (303, 315).

13. A vehicle (800) comprising the vehicular display module (802) according to claims 1 to 10.

14. A vehicle (800) comprising the dashboard assembly according to claims 11 or 12.

15. An cockpit display for an aeroplane comprising the vehicular display module according to claims 1 to 10.
